# EUROPÄISCHE PATENTSCHRIFT

(11) **EP 2 317 180 B1**
(45) Veröffentlichungstag und Bekanntmachung des Hinweises auf die Patenterteilung: **09.01.2013**
(21) Anmeldenummer: 09836447.4
(22) Anmeldetag: 02.11.2009
(51) Int. Cl.: F16H 48/20

(54) **ABIK-DIFFERENTIAL**
ABIK DIFFERENTIAL
DIFFÉRENTIEL « ABIK »

(30) Priorität: 31.12.2008 RU 2008153037
(43) Veröffentlichungstag der Anmeldung: 04.05.2011
(73) Patentinhaber: Kuzevanov, Gai Viktorovich, Chelyabinsk 454084 (RU)
(72) Erfinder: Kuzevanov Viktor M., 454106 Chelyabinsk (RU); Kuzenanov Gai V., 454084 Chelyabinsk (RU)
(74) Vertreter: Jeck, Anton
(86) Internationale Anmeldenummer: PCT/RU2009/000595
(87) Internationale Veröffentlichungsnummer: WO 2010/077173

(56) Entgegenhaltungen:
- WO-A1-2008/125814
- DE-A1-102006 025 058
- GB-A- 452 294
- RU-C1- 2 339 859
- RU-C2- 2 192 972
- US-A- 1 948 095

## Beschreibung

Die Erfindung betrifft ein Kegelrad-Differentialgetriebe nach dem Oberbegriff des unabhängigen Anspruchs.

Die Erfindung ist in Mehrweggetrieben, insbesondere in Differentialantrieben von Antriebsachsen und Fahrzeugrädem einsetzbar.

Bei bekannten Stirnrad-Differentialgetrieben sind die mittleren Trabantenräder, die ineinander greifen, elliptisch ausgebildet. Bei einer Relativdrehung der Achswellen und Trabantenräder wird das Übersetzungsverhältnis innerhalb einer Umdrehung der elliptischen Trabantenräder variabel. Solche Vorrichtungen sorgen bei der Relativdrehung der Achswellen für eine periodische Steigerung des Schleppmoments auf dem unterholenden Rad (A. Kh. Lefarov. Ausgleichgetriebe der Fahrzeuge und Schlepper, 1972. Maschinostroenie, Moskau, S. 101).

Dieses bekannte Differentialgetriebe mit elliptischen Trabantenrädem hat eine sehr komplizierte Bauweise und weist eine geringe Sperrwirkung auf.

Ein Kegelraddifferentialgetriebe mit variablem Übersetzungsverhältnis enthält Achswellenräder, die untereinander durch eine Verzahnung und wenigstens ein Trabantenrad verbunden sind. Das Trabantenrad dreht sich frei auf einer Achse, die koaxial mit der Geometrieachse des Trabantenrads ist. Die Achse ist im Gehäuse befestigt. Die Ritzelzähne sind in diesem Differentialgetriebe mit einem Spezialprofil ausgebildet. Als Ergebnis ist ein Kraftarm des Trabantenrads im Eingriff mit dem Achswellenrad innerhalb der Zahnteilung beim Drehen des Trabantenrads um seine Achse instabil. Der Kraftarm nimmt abwechselnd im Eingriff mit einem Zahnrad zu und im Eingriff mit dem anderen Zahnrad ab. Die Kraftübersetzung zwischen den Achswellen innerhalb der Zahnteilung ergibt sich als variabel (s. ebenda S. 101).

Der bekannte Aufbau des Differentialgetriebes ist kompliziert, weil die Herstellung des Zahnrads mit variablem Übersetzungsverhältnis und insbesondere die Herstellung von einem anwendungsspezifischen Profil seiner Zähne einer speziellen Ausrüstung bedürfen. Darüber hinaus hat dieses Differentialgetriebe eine geringe Sperrwirkung, weil die Vergrößerung des Hebelarms des Kraftmoments bei der bekannten Ausführung nur um eine Zahngröße möglich ist.

Durch US 1,948,095, das den nächstliegenden Stand der Technick repräsentiert, sind ein Kegelrad-Differentialgetriebe und ein Stirnrad-Differentialgetriebe bekannt. Beide Differentialgetriebe verfügen über Abtriebswellen, die wenigstens durch ein Ausgleichsrad kinematisch miteinander gekoppelt sind. Das Ausgleichsrad ist mit dem Gehäuse mittels wenigstens eines Zwischenstücks verbunden. Bei dem Kegelrad-Differentialgetriebe ist das Zwischenstück in einem Radialloch im Gehäuse hin und her schwenkbar und versetzt mit der Geometrieachse des Ausgleichsrads eingebaut. Darüber hinaus sind bei dem Kegelrad-Differentialgetriebe die Paarungsflächen des Ausgleichsrads und des Zwischenstücks versetzt zur Geometrieachse des Ausgleichsrads. Bei dem Stirnrad-Gemäss der Erfindung ist ein Ausgleichsrad mittels wenigstens eines Zwischenstücks mit dem Gehäuse verbunden. Das Zwischenstück dreht sich frei im Gehäuse koaxial mit der Geometrieachse des Ausgleichsrads. Die Paarungsflächen des Ausgleichsrads und des Zwischenstücks sind in Bezug auf die Geometrieachse des Ausgleichsrads versetzt.

Die Vereinfachung der Konstruktion ist dadurch sichergestellt, dass das Verfahren zur Herstellung der im angemeldeten Differentialgetriebe benutzten Zahnräder einfach ist und dass keine zusätzliche Ausrüstung für ihre Herstellung erforderlich ist.

Die Sperrwirkung ist bei dem angemeldeten Differentialgetriebe ausgerechnet dank einer Verbindung des Ausgleichsrads mit dem Gehäuse durch wenigstens ein Zwischenstück erreicht. Das Zwischenstück dreht sich frei im Gehäuse koaxial mit der Geometrieachse des Ausgleichsrads und ist mit dem Ausgleichsrad mittels der Paarungsflächen kinematisch verbunden. Dabei sind die Paarungsflächen in Bezug auf die Geometrieachse des Ausgleichsrads versetzt ausgebildet. Das ist durch eine Versetzung der Paarungsflächen des Zwischenstücks und des Ausgleichsrads sichergestellt. Dabei stellt das Ausgleichsrad eine Exzentrizität her. Die Exzentrizität ermöglicht es, den Hebelarm des Kraftmoments wesentlich zu verändern.

Der Aufbau des angemeldeten Differentialgetriebes stellt eine freie Bewegung der inneren Bestandteile des Differentialgetriebes bei der Einleitung eines zusätzlichen entgegen gesetzten Moments (Moment mit einem entgegen gesetzten Vorzeichen) in eine der Abtriebswellen sicher. Andererseits beschränkt ein solcher Aufbau des Differentialgetriebes die Möglichkeit der Abwälzung von Innenbestandteilen bei einer zum Stehen gebrachten Abtriebswelle, wenn das Moment mit gleichem Vorzeichen angelegt wird. Die Steigerung der Sperrwirkung im angemeldeten Differentialgetriebe beruht auf einer Änderung der Momentverteilung vom Gehäuse auf die exzentrisch angeordneten Paarungsflächen des Ausgleichsrads und des Zwischenstücks. Der Krafthebelarm im Eingriff mit den Differentialseitenrädern ist wegen der Exzentrizität instabil. Er nimmt abwechselnd je nach Eingriff mit dem einen oder dem anderen Zahnrad zu bzw. ab. Bei einer bestimmten Position der Paarungsflächen zum Gehäuse verhindert das Moment des Gehäuses die Drehung des Ausgleichsrads, und zwar durch das Zwischenstück und dank der Verlagerung des Druckpunkts. Während der Fahrt auf einer Straße mit unterschiedlichen Hafteigenschaften nimmt das Ausgleichsrad des angemeldeten Differentialgetriebes automatisch eine solche Stellung ein, die die erforderliche Differenz zwischen den Antriebsrädern und das Fahren ohne Gleitschlupf sicherstellt.

Die Erfindung wird anhand eines in den Zeichnungen dargestellten Ausführungsbeispiels näher erläutert. Es zeigen:

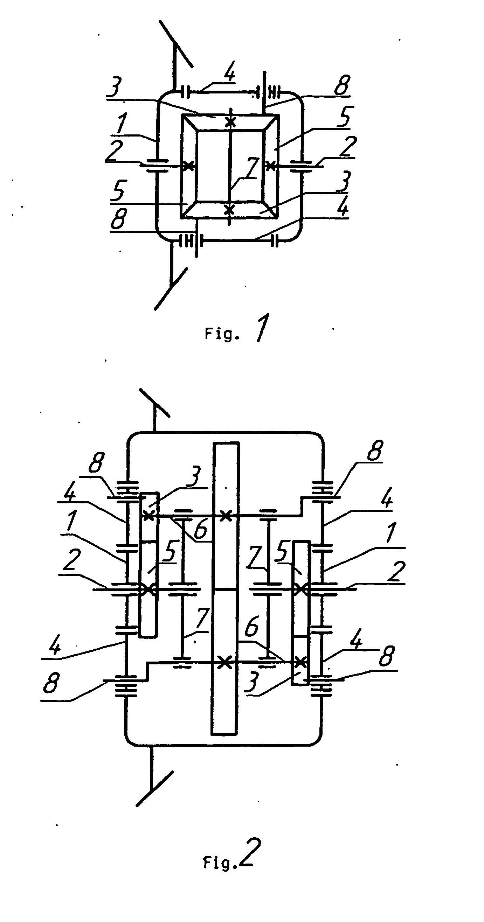

- Fig. 1: den Getriebeplan mit einem Kegelrad-Differentialgetriebe mit versetzten Paarungsflächen,
- Fig. 2: den Getriebeplan mit einem Stirnrad-Differentialgetriebe mit versetzten Paarungsflächen nach dem Stand der Technik,
- Fig. 3: den Längsschnitt des angemeldeten Differentialgetriebes (Ausführungsform eines Zwischenstücks als eine Buchse),
- Fig. 4: den Schnitt A-A aus Fig. 3,
- Fig. 5, 6, 7: eventuelle Ausführungsformen des Zwischenstücks in einer kinematischen Beziehung mit einem Ausgleichsrad: Sektor, Segment u. a. m. und
- Fig. 8: eine Ausführungsform des Ausgleichsrads mit zwei Zwischenstücken (in Form von Buchsen).

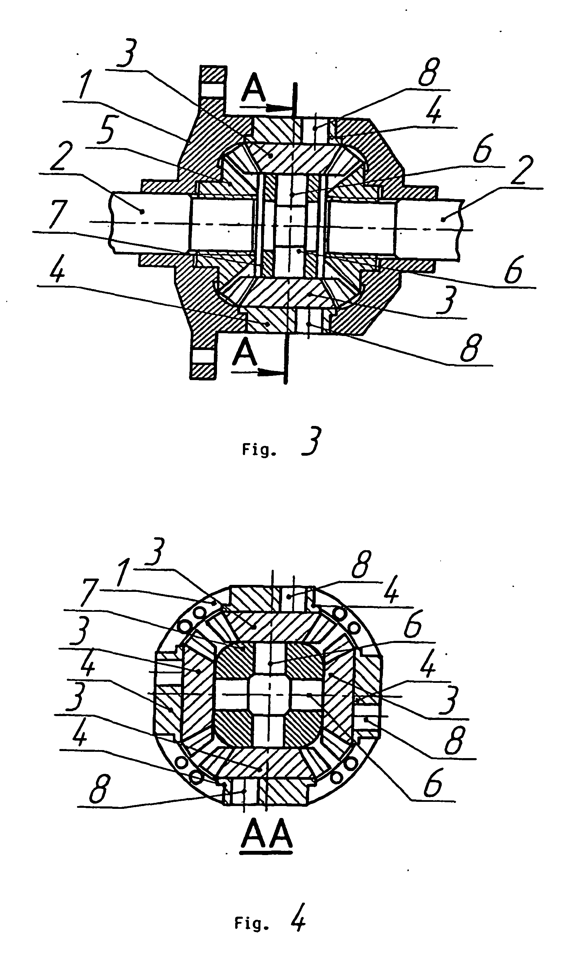

Das angemeldete Exzenter-Differentialgetriebe ABIK (ABIK steht für eine Selbstsperrung, eine Erfindung von Kuzevanov) (Fig. 3, 4) hat ein Zylindergehäuse 1, welches aus zwei Halbteilen besteht. Die Halbteile sind mittels Zentrierstiften fest verschraubt (in der Zeichnung nicht dargestellt). Das Gehäuse 1 hat zwei Öffnungen für Abtriebswellen 2 und vier Radiallöcher, die mit einer Geometrieachse der Ausgleichsräder 3 koaxial sind. Die Zwischenstücke 4 drehen sich in diesen Löchern frei und abgegrenzt von der Axial- und Radialversetzung. In diesem konkreten Ausführungsbeispiel des Differentialgetriebes sind die Zwischenstücke 4 als Buchsen ausgebildet. Die Buchsen haben eine Innenbohrung, die zur Geometrieachse der Ausgleichsräder 3 versetzt ist.

Die Abtriebswellen 2 sind mit Differentialseitenrädern 5 gekoppelt. Die Differentialseitenräder 5 sind untereinander mittels einer Verzahnung mit den Ausgleichsrädern 3 verbunden. Die Ausgleichsräder 3 weisen eine innere Zentrierachse 6 und eine Außenachse 8 auf. Die innere Zentrierachse 6 ist mit der Geometrieachse der Ausgleichsräder 3 gleichläufig. Die Zentrierachse 6 tritt in die Öffnung des Zentrierstücks 7 ein, welches nicht mit dem Gehäuse 1 verbunden ist. Das Gehäuse 1 ist in diesem Beispiel als Quadrat ausgebildet. Die Außenachse 8 tritt in die Öffnung der Buchse mit einer Exzentrizität ein und fällt mit der versetzten Öffnung der Buchse zusammen.

Das Differentialgetriebe funktioniert in folgender Weise:

Die Momentverteilung vom Gehäuse 1 erfolgt im angemeldeten Differentialgetriebe durch das Zwischenstück 4, nämlich die Buchse.

Wenn eine Abtriebswelle 2 stoppt, wird ein Moment mit einem Vorzeichen vom Gehäuse 1 über die Buchse auf die versetzte Achse des Ausgleichsrads 3 übertragen. Je nach der Anordnung dieser Achse entsteht ein Moment, welches einer Drehung der Ausgleichsräder 3 entgegenwirkt. Sobald das zusätzliche Moment an einer der Abtriebswellen 2 entsteht, z. B. wenn das Rad beim Wenden des Fahrzeugs voreilt oder wenn ein Hindernis umfahren wird, wird die auf das Ausgleichsrad 3 wirkende Umfangskraft verdoppelt, und das Ausgleichsrad 3 lässt die Buchse im Gehäuse 1 des Differentialgetriebes mittels der versetzten Achse drehen.

Es ist zweckmäßig, dass das Differentialgetriebe mit vier Ausgleichsrädern 3 versehen ist, um eine Versetzung der Geometrieachse des Ausgleichsrads 3 zur Geometrieachse des Zwischenstücks 4 zu beseitigen. Die Ausgleichsräder 3 sind von der Kreisausrichtung der versetzten Paarungsflächen des Ausgleichsrads 3 und des Zwischenstücks 4 beim Zusammenbau des Differentialgetriebes abhängig.

Neben der Ausführung des Zwischenstücks 4 in Form von Buchsen sind andere unterschiedliche Ausführungsformen und Konfigurationen des Zwischenstücks 4 möglich, so dass es im Gehäuse 1 koaxial mit der Geometrieachse des Ausgleichsrads 3 dreht (z. B. Stumpfkegel, Vielflächner, Buchse mit dreieckiger gleichachsiger Kontur u. a. m.).

Es sind auch andere Ausführungsformen der Paarungsflächen des Zwischenstücks 4 und des Ausgleichsrads 3 bis auf die Zylinderachse möglich, z. B. ein Ausschnitt-Überstand in Form eines Sektors, eines Segments oder einer Ellipse in der Zylinderöffnung u. a. m.

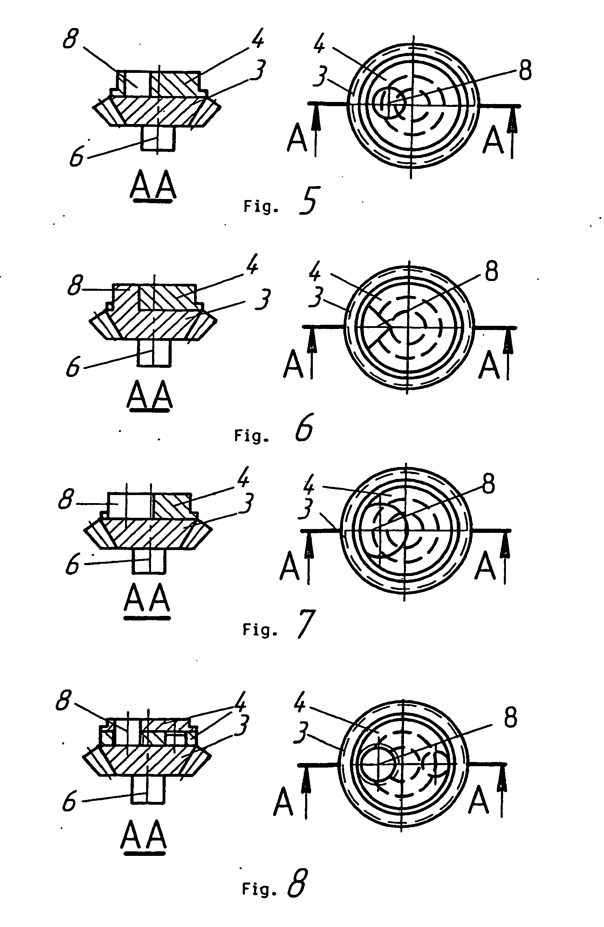

Es ist eine weitere Ausführungsform des Differentialgetriebes mit einem Ausgleichsrad 3 mit zwei Zwischenstücken 4 als Buchsen (Fig. 8) möglich.

Es ist eine andere Ausführung bei der Zentrierung der Ausgleichsräder 3 möglich. Die Ausgleichsräder 3 haben Innenbohrungen, die mit der Geometrieachse der Ausgleichsräder 3 koaxial sind. Die Bohrungen passen mit dem Zentrierstück 7 in Form eines Kreuzstücks zusammen, wobei das Zentrierstück 7 mit dem Gehäuse 1 verbunden ist.

## Patentansprüche

1. Kegelrad-Differentialgetriebe mit Abtriebswellen (2), die wenigstens durch ein Ausgleichsrad (3) kinematisch miteinander gekoppelt sind, wobei
- das wenigstens eine Ausgleichsrad (3) mit dem Gehäuse (1) mittels wenigstens eines Zwischenstücks (4) verbunden ist,
- das wenigstens eine Zwischenstück (4) in einem Radialloch im Gehäuse (1) frei drehbar eingebaut ist, und
- die Paarungsflächen des Ausgleichsrads (3) und des Zwischenstücks (4) zur Geometrieachse des Ausgleichsrads (3) versetzt sind, und
- das Radialloch mit einer Geometrieachse des Ausgleichsrads (3) koaxial ist, **dadurch gekennzeichnet, dass**
- das Zwischenstück (4) im Gehäuse (1) gleichläufig mit der Geometrieachse des Ausgleichsrads (3) eingebaut ist.

2. Kegelrad-Differentialgetriebe nach Anspruch 1,
**dadurch gekennzeichnet,**
**dass** die Zwischenstücke (4) als Buchsen ausgebildet sind.

3. Kegelrad-Differentialgetriebe nach Anspruch 2,
**dadurch gekennzeichnet,**
**dass** die Buchsen eine Innenbohrung haben, die zur Geometrieachse der Ausgleichsräder (3) versetzt ist.

4. Kegelrad-Differentialgetriebe nach Anspruch 1, 2 oder 3,
**dadurch gekennzeichnet,**
**dass** die Ausgleichsräder (3) eine innere Zentrierachse (6) und eine Außenachse (8) aufweisen, wobei die innere Zentrierachse (6) mit der Geometrieachse der Ausgleichsräder (3) gleichläufig ist und in die Öffnung des Zentrierstücks (7) eintritt, welches nicht mit dem Gehäuse (1) verbunden ist und die Außenachse (8) in die Öffnung der Buchse mit einer Exzentrizität eintritt und mit der versetzten Öffnung der Buchse zusammenfällt.

5. Kegelrad-Differentialgetriebe nach Anspruch 1, 2 oder 3,
**dadurch gekennzeichnet,**
**dass** die Ausgleichsräder (3) Innenbohrungen haben, die mit der Geometrieachse der Ausgleichsräder (3) koaxial sind, wobei die Bohrungen mit dem Zentrierstück (7) in Form eines Kreuzstücks zusammenpassen, welches mit dem Gehäuse (1) verbunden ist.

6. Kegelrad-Differentialgetriebe nach einem der vorherigen Ansprüche,
**dadurch gekennzeichnet,**
**dass** das Differentialgetriebe mit vier Ausgleichsrädern (3) versehen ist.

## Claims

1. A bevel-wheel differential gear having driven shafts (2) that are coupled kinematically to one another by means of at least one balancing wheel (3), in which
- the at least one balancing wheel (3) is connected to the housing (1) by means of at least one adapter (4),
- the at least one adapter (4) is built into a radial hole in the housing (1) in a freely rotatable manner, and
- the paired faces of the balancing wheel (3) and of the adaptor (4) are offset from the geometric axis of the balancing wheel (3), and
- the radial hole is coaxial with a geometric axis of the balancing wheel (3),
**characterized in that**
- the adapter (4) is built into the housing (1) coaxially to the geometric axis of the balancing wheel (3).

2. The bevel-wheel differential gear according to claim 1,
**characterized in that**
the adapters (4) are embodied as bushings.

3. The bevel-wheel differential gear according to claim 2,
**characterized in that**
the bushings have an inner bore which is offset from the geometric axis of the balancing wheels (3).

4. The bevel-wheel differential gear according to claim 1, 2 or 3,
**characterized in that**
the balancing wheels (3) have an inner centering shaft (6) and an outer shaft (8), and the inner centering shaft (6) is parallel to the geometric axis of the balancing wheels (3) and enters into the opening in the centering piece (7), which piece is not connected to the housing (1), and the outer shaft (8) enters into the opening in the bushing with an eccentricity and coincides with the offset opening of the bushing.

5. The bevel-wheel differential gear according to claim 1, 2 or 3,
**characterized in that**
the balancing wheels (3) have inner bores which are coaxial with the geometric axis of the balancing wheels (3), and the bores fit together with the centering piece (7), in the form of a cross, which is connected to the housing (1).

6. The bevel-wheel differential gear according to one of the foregoing claims,
**characterized in that**
the differential gear is provided with four balancing wheels (3).

## Revendications

1. Engrenage différentiel à pignons coniques avec des arbres de sortie (2) qui sont couplés entre eux cinématiquement par au moins un pignon de compensation (3), dans lequel
- ledit au moins un pignon de compensation (3) est relié au carter (1) au moyen d'au moins une pièce intermédiaire (4),
- ladite au moins une pièce intermédiaire (4) est montée à rotation libre dans un trou radial du carter (1),
- les surfaces d'appariement du pignon de compensation (3) et de la pièce intermédiaire (4) sont décalées par rapport à l'axe géométrique du pignon de compensation (3), et
- le trou radial est coaxial à un axe géométrique du pignon de compensation (3), **caractérisé en ce que**
- la pièce intermédiaire (4) est montée dans le carter (1) parallèlement à l'axe géométrique du pignon de compensation (3).

2. Engrenage différentiel à pignons coniques selon la revendication 1,
**caractérisé en ce**
**que** les pièces intermédiaires (4) sont réalisées sous la forme de douilles.

3. Engrenage différentiel à pignons coniques selon la revendication 2,
**caractérisé en ce**
**que** les douilles possèdent un alésage intérieur qui est décalé par rapport à l'axe géométrique des pignons de compensation (3).

4. Engrenage différentiel à pignons coniques selon la revendication 1, 2 ou 3,
**caractérisé en ce**
**que** les pignons de compensation (3) présentent un axe de centrage intérieur (6) et un axe extérieur (8), l'axe de centrage intérieur (6) étant parallèle à l'axe géométrique des pignons de compensation (3) et pénétrant dans l'ouverture de la pièce de centrage (7), laquelle n'est pas reliée au carter (1), et l'axe extérieur (8) pénétrant dans l'ouverture de la douille avec une excentricité et coïncidant avec l'ouverture décalée de la douille.

5. Engrenage différentiel à pignons coniques selon la revendication 1, 2 ou 3,
**caractérisé en ce**
**que** les pignons de compensation (3) possèdent des alésages intérieurs qui sont coaxiaux à l'axe géométrique des pignons de compensation (3), les alésages étant adaptés à la pièce de centrage (7) sous la forme d'une pièce en croix qui est reliée au carter (1).

6. Engrenage différentiel à pignons coniques selon une des revendications précédentes,
**caractérisé en ce**
**que** l'engrenage différentiel est pourvu de quatre roues de compensation (3).
